(19) Europäisches Patentamt
European Patent Office
Office européen des brevets

(11) Veröffentlichungsnummer: **0 074 329**
**B1**

(12) **EUROPÄISCHE PATENTSCHRIFT**

(45) Veröffentlichungstag der Patentschrift: **28.09.88**

(51) Int. Cl.$^4$: **A 01 N 25/02,** A 01 N 25/04

(21) Anmeldenummer: **82810178.2**

(22) Anmeldetag: **29.04.82**

(54) **Wässrige Pestizidkonzentrate.**

(30) Priorität: **09.09.81 GB 8127203**

(43) Veröffentlichungstag der Anmeldung:
**16.03.83 Patentblatt 83/11**

(45) Bekanntmachung des Hinweises auf die Patenterteilung:
**28.09.88 Patentblatt 88/39**

(84) Benannte Vertragsstaaten:
**AT BE CH DE FR GB IT LI LU NL SE**

(58) Entgegenhaltungen:
**EP-A-0 062 181**
**DE-A-1 620 175**
**DE-A-1 792 688**
**FR-A-2 187 226**
**FR-A-2 187 227**
**US-A-3 307 931**
**US-A-4 107 302**
**US-A-4 195 083**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**

(72) Erfinder: **Nowak, Edward**
**12 Alice Way**
**Histon Cambridge CB4 4YA (GB)**
Erfinder: **Dyer, Ross Mortimore Ward**
**46 The Limes**
**Harston Nr. Cambridge CB2 8QT (GB)**
Erfinder: **Neuenschwander, Ernst, Dr.**
**Moosweg 20**
**CH-4125 Riehen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 074 329 B1

**Beschreibung**

Die vorliegende Erfindung betrifft wässrige pestizide Konzentrate von flüssigen und/oder festen, in Wasser hinreichend stabilen, wasserunlöslichen Wirkstoffen, die vom Verbraucher zum Versprühen verdünnt werden können und ein Verfahren zur Herstellung solcher Formulierungen.

Vom Standpunkt des Formulierungschemikers aus können viele pestizide Aktivstoffe als wasserunlöslich betrachtet werden. Ihre Wasserlöslichkeit ist normalerweise weniger als 1,0 %-Gew./Volumen. Dieser Wert schränkt die Erfindung jedoch in keiner Weise ein. Die Auflösung dieser Verbindungen in wässrigem Medium zu einem wässrigen Konzentrat war bisher schwierig und in vielen Fällen unmöglich. Dort, wo eine Auflösung möglich war, hatte das Endprodukt eine zu geringe Konzentration, eine schlechte Lagerfähigkeit, eine schlechte Tief-temperatur-Stabilität und war im allgemeinen zum Verkauf nicht geeignet. Deshalb werden für diese Aktivstoffe üblicherweise klassische wasserfreie Formulierungstechniken angewendet oder es werden wässrige Suspensionen hergestellt, sofern die Aktivsubstanz einen Schmelz-punkt von mindestens 70°C besitzt.

Der gewählte Formulierungstyp ist abhängig von den physikalischchemischen Eigenschaften der verwendeten Aktivstoffe. Es können drei Kategorien unterschieden werden.

1. Emulgierbare Konzentrate (EC) - bei öllöslichen Aktivstoffen.

Bei diesem Formulierungstyp ist ein Emulgator oder ein oberflächen-aktives Mittel notwendig, um sicherzustellen, dass das Produkt eine homogene Emulsion ergibt, wenn es zum Verbrauch mit Wasser verdünnt wird. Der hauptsächliche Vorteil dieser Formulierungsart ist es, dass das Produkt eine Flüssigkeit ist. Nachteile dieses Formulierungstyps sind: 1. werden grosse Mengen von potentiell gefährlichen und teuren Lösungsmitteln gebraucht und 2. werden aus Sicherheitsgründen diese Formulierungen oft in teuren Aluminium- oder Weissblechbehältern verpackt.

2. Netzbare oder dispergierbare Pulver (WP) — bei ölunlöslichen Aktivstoffen.

Bei diesem Formulierungstyp werden oberflächenaktive Mittel benötigt, um eine vollständige Dispergierung des Produkts sicherzustellen, wenn es vom Endverbraucher mit Wasser verdünnt wird. Die hauptsächlichen Nachteile dieses Formulierungstyps sind: 1. dass es sich um ein Pulver handelt und so ein mögliches Staubrisiko beinhaltet und 2. dass das Pulver vom Anwender auf dem Feld gewogen werden muss und nicht wie eine Flüssigkeit volumetrisch dosiert werden kann.

3. Wässrige Suspensionskonzentrate (SC) — bei öl — und wasserunlöslichen Aktivsubstanzen mit einem Schmelzpunkt über 70°C.

Bei diesem Formulierungstyp wird der Wirkstoff fein gamahlen und mit Hilfe von oberflächenaktiven Stoffen in Wasser suspendiert. Der hauptsächliche Vorteil dieses Formulierungstyps ist das Vorliegen als Flüssigkeit. Die Nachteile sind die Neigung zur Bildung von nicht-resuspendierbaren Bodensätzen und dass dieser Formulierungstyp nicht für flüssage und niedrigschmelzende Wirkstoffe anwendbar ist, auch wenn sie nur als Mischungspartner verwendet werden sollen.

Folglich kann ein Aktivstoff als flüssiges emulgierbares Konzentrat formuliert werden, wenn er in Oelen löslich ist. Ist er dagegen in Oelen nicht löslich, wird er üblicherweise als netzbares Pulver oder bei genügend hohem Schmelzpunkt als Suspensionskonzentrat formuliert. Alle drei Formulierungstypen haben erhebliche Nachteile, wobei die der netzbaren Pulver grösser sind als die der beiden anderen.

Aus den französischen Patentanmeldungen FR-A-2187226 und FR-A-2187227 sind Mikroemulsionen insektizid und herbizid wirksamer Agrochemikalien bekannt geworden. Neben dem agrochemischen Wirkstoff enthalten diese auf wässriger Basis formulierten Mikroemulsionen noch einen Emulgator und ein Hydrotrop.

Die Mikroemulsionen sind bereits auf Anwendungskonzentration verdünnt und können bis zu 5% Wirkstoff enhalten. Die bei diesem Formulierungstyp erzielbaren niedrigen Wirkstoffkonzentrationen bedingen einen hohen Lager- und Verpackungsaufwand.

Wir haben jatzt gefunden, dass viele Nachteile, die mit der Formulierung der in dieser Anmeldung genannten Aktivstoffe verbunden sind, durch die neue erfindungsgemässe Formulierungstechnik überwunden werden können.

Hauptsächliches Ziel der Erfindung ist es, wässrige pestizide Lösungskonzentrate von pestiziden Aktivstoffen bereitzustellen, die in Wasser stabil und wasserunlöslich sind. Diese Konzentrate sollen lagerfähig und mit Wasser verdünnbar sein, wobei sich relativ stabile Emulsionen oder Dispersionen bilden.

Ein weiteres Ziel der Erfindung ist die Bereitstellung eines Formulierungsverfahrens, das es erlaubt, einen pestiziden Aktivstoff des genannten Typs mit einem wasserunlöslichen festen Aktivstoff, der selbst nicht nach dem erfindungsgemässen Verfahren formuliert werden kenn, zu kombinieren.

Die Ziele der vorliegenden Erfindung werden durch die Verwendung aromatischer Sulfonsäuren und ihrer Salzderivate erreicht. Diese Gruppe von Verbindungen dient dabei als Hydrotrop.

Erfindungsgemäss wird daher ein wässriges Lösungskonzentrat bereitgestellt, das dadurch gekennzeichnet ist, dass es

α) ein flüssiges oder festes in Wasser stabiles und zu weniger als 1% lösliches Pestizid mit einer Wasserzahl grösser 10 und

β) ein Salz einer aromatischen Sulfonsäure der Formel

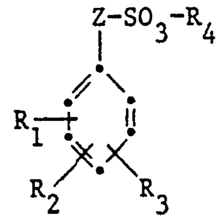

(I),

worin $R_1$, $R_2$ und $R_3$ die gleiche oder verschiedene Bedeutung haben und für Wasserstoff oder geradkettiges oder verzweigtes $C_1$-$C_6$-Alkyl stehen, Z eine direkte Bindung oder eine geradkettige oder verzweigte $C_1$-$C_6$-Alkylenbrücke und $R_4$ ein Alkalimetall, eine Ammoniumgruppe, eine primäre, sekundäre oder tertiäre Amingruppe, eine Hydroxy-alkylamingruppe oder eine Morpholingruppe bedeutet, in einer zur Bildung einer wässrigen Lösung ausreichenden Menge enthält. Die erfindungsgemässen wässrigen Lösungskonzentrate können durch einfaches Auflösen einer Verbindung (α) in einer wässrigen Lösung einer Verbindung (β) hergestellt werden.

Vorzugsweise enthalten die erfindungsgemässen wässrigen Lösungskonzentrate bis zu 75%-Gew./Volumen an Wirkstoff (Komponents α), insbesondere 5 bis 50%-Gew./Volumen, und bis zu 70%-Gew./Volumen an reinem Hydrotrop (Komponent β), insbesondere 15 bis 50%-Gew./Volumen.

Typische Beispiele für Verbindungen der Formel I sind Ammoniumcumolsulfonat (im Handel als 60%iges wässriges Konzentrat erhältlich), Kaliumxylolsulfonat (im Handel erhältlich in fester, reiner Form und als 40%iges wässrige Lösung), Natriumcumolsulfonat (im Handel erhältlich in fester, reiner Form), Natriumtoluolsulfonat (im Handel erhältlich in fester, reiner Form und als 40%iges wässrige Lösung), und Xylolsulfonsäure (im Handel erhältlich als 90%iges, mit Wasser verdünnbare Flüssigkeit).

Der Löslichkeitsgrad des Pestizides im dem Hydrotrop ist abhängig von drei Eingenschaften:

1) der Wasserlöslichkeit des Pestizides (oder einer indirekten Kenngrösse seiner Wasserlöslichkeit wie z.B. der "Wasserzahl", die nach dem Verfahren von Greenwald, Brown und Finemann, Anal. Chem. *28,* 1693 (1956) bestimmt werden kann),

2) der chemischen Struktur des Hydrotrops und

3) der Konzentration des Hydrotrops im formulierten Produkt.

Generell sind flüssige Pestizide mit einer "Wasserzahl" von weniger als 10 zu lipophil und in einer aromatischen Sulfonsäure(-salz)-Lösung nicht bis zu einem kommerziell interessanten Grade löslich. Dagegen können Pestizide mit "Wasserzahlen" über 10 unter Verwendung geeigneter aromatischer Sulfonsäuren, bzw. deren Salzen, als handelsfähige Produkte auf der Basis von Wasser formuliert werden. Ueberraschenderweise wurde festgestellt, dass das Pestizid, wenn es erst einmal in diesem Hydrotrop gelöst ist, bei der Verdünnung mit Wasser eine Emulsion oder Dispersion bildet. Dieses Phänomen kann ohne den Gebrauch von Emulgatoren oder oberflächenaktiven Mitteln welche bei einem herkömmlichen emulgierbaren Konzentrat in einem Kohlenwasserstofflösungsmittel notwendig sind, auftreten.

Dennoch kann es hilsreich sein, den wässrigen erfindungsgemässen Konzentraten funktionelle Hilfsmittel wie oberflächenaktive Mittel und zusätzliche Lösungsmittel (zur besseren Blattbefeuchtung und Wirkstoffpenetration und zur Vermeidung von Kristallisation fester Wirkstoffe aus verdünnten wässrigen Lösungen, d.h. aus der Sprühmischung), Haft- und Verdickungsmittel (zur besseren Haftfähigkeit auf den Blättern und zur Einstellung der Tröpfchengrösse bei der Anwendung) und Antischaummitel zur Vermeidung des Schäumens, zusetzt.

Beispiele solcher funktioneller Hilfsmittel sind:

a) oberflächenaktive Mittel un zusätzliche Lösungsmittel: Nonlyphenolethoxylate, z.B. solche aus der im Handel befindlichen® Ehtylan-N-Reihe, Alkohol- und Fettsäureethoxylate, z.B. solche aus der im Handel befindlichen ®Ethylan-C-Reihe und Kohlenwasserstofflösungsmittel wie Pflanzenöle, Mineralöle, Methylphenole und Polyglykolether,

b) Haft- und Verdickungsmittel: Polyethylenglykole, Polyacrylamidlösungen und Polyvinylpyrrolidone und

c) Antischaummittel: Verbindungen und Emulsionen auf Silikonbasis, Fettsäuren z.B. Kokosnussöl und Ethylenoxyd/Propylenoxid-Block-Copolymere wie die käuflichen ®Pluronic-Polyalkohole.

Beispiele für flüssige und feste Wirkstoffe, die sich besonders zum Gebrauch als Komponenten (α) in den neuen Konzentraten eignen, sind in den folgenden Tabellen aufgelistet:

Tabelle 1:

Flüssige Wirkstoffe

| Wirkstoff | Wirkstoffklasse | Uebliche Formulierung | Neue Formulierung auf Basis von Wasser |
|---|---|---|---|
| Metolachlor | Acetanilid | EC (500 g AS/l) | ECW (300 g AS/l) |
| Propiconazol | Triazol | EC (250 g AS/l)<br>WP (250 g AS/kg) | ECW (250 g AS/l) |
| Imazalil | Diazol | EC (500 g AS/l) | ECW (500 g AS/l) |
| Tridemorph | Morpholin | EC (750 g AS/l) | ECW (500 g AS/l) |
| Chlorfenvinphos | Phosphat | EC (300 g AS/l) | ECW (300 g AS/l) |

Tabelle 2:

Feste Wirkstoffe

| Wirkstoff | Wirkstoffklasse | Uebliche Formulierung | Neue Formulierung auf Basis von Wasser |
|---|---|---|---|
| Metalaxyl | Acylalanin | WP (250 g AS/kg) | ECW (250 g AS/l) |
| 2-(2,4-Dichlor-phenyl)-1-(1H-1,2,4-triazol-1-yl)-pentan | Triazol | EC (100 g AS/l) | ECW (100 g AS/l) |

EC = Emulgierbares Konzentrat

WP = Netzbares Spritzpulver

ECW = Emulgierbares Konzentrat als wässrige Lösung

AS = Aktivsubstanz.

Viele wasserunlösliche feste Aktivstoffe sind nicht bis zu einem merklichen Grade in diesen Hydrotropen löslich, obwohl einige wassrunlösliche feste Wirkstoffe in diesen Hydrotropen löslich sind. Es ist deshalb ebenfalls Ziel der vorliegenden Erfindung, ein Komnbinationsprodukt zur Verfügung zu stellen, das zwei oder mehrere Aktivstoffe enthält, die ein breiteres Wirkungsspektrum haben, wobei die aromatische Sulfonsäuresalzlösung sowohl als suspendierendes als auch als lösendes Reagenz dient.

Einen weiteren Erfindungsgegenstand bilden daher wässrige Konzentrate, die neben den bereits definierten Komponenten (α) und (β) als weiteren Bestanteil (γ) ein festes, in dem Hydrotrop nicht lösliches Pestizid enthalten.

Diese erfindungsgemässen wässrigen Dreikomponentenkonzentrate können durch Herstellung einer Lösung der Komponente (α) in (β), vorzugsweise, aber nicht notwendigerweise unter Verwendung eines oberflächenaktiven Mittels, und Zugabe der Komponente (γ) zur entstandenen Lösung und gegebenenfalls Mahlen der Mischung bis zur gewünschten Teilchengrösse der festen Komponente (γ) hergestellt werden.

Die entsteende Formulierung ist:

i) eine Flüssigkeit

ii) auf der Grundlage von Wasser hergestellt
iii) physikalisch und chemisch bei hohen und triefen Temperaturen stabil
iv) mit Wasser zu einer stabilen sprühfähigen Spritzrühe verdünnbar und
v) verglichen mit dem entsprechenden netzbaren Pulver nicht staubend.

Der Gebrauch von aromatischen Sulfonsäuresalzlösungen als Hydrotrop und/oder als suspendierendes Mittel für feste Pestizide had die folgenden Vorteile: Eine unter Verwendung dieser Hydrotrope hergestellte Suspension benötigt möglicherweise keinen Zusatz von Antifrostmitteln oder Suspensionshilfen, den die käuflichen Lösungen dieser Hydrotrope können dem Endprodukt alle diese Eigenschaften verleihen.

Diese Technik kann auch mit Erfolg angewendet werden, um andere flüssige oder feste Wirkstoffe mit weiteren festen Pestiziden, die nicht im Hydrotrop löslich sind, zu kombinieren. Beispiele finden sich in den folgenden Tabellen:

TABELLE 3
Kombinationen von flüssigen und festen Pestiziden

| Flüssig (α) | | Fest (γ) |
|---|---|---|
| Propiconazol | + | Captan |
| Propiconazol | + | Carbendazim |
| Metolachlor | + | Atrazin |
| Imazalil | + | Thiabendazol |

TABELLE 4
Kombinationen von zwei festen Pestiziden

| Fest (α) | | Fest (γ) |
|---|---|---|
| Metalaxyl | + | Kupferoxychlorid |
| Metalaxy | + | Ziram |
| Metalaxyl | + | Folpet |
| 2-(2,4-dichlorphenyl)-1-(1H-1,2,4-triazol-1-yl)-pentan | + | Kupferoxychlorid |

Die folgenden Beispiele dienen zur näheren Illustration der vorliegenden Erfindung:

Vergleichsbeispiel A
(Uebliche Formulierung)

| | |
|---|---|
| Propiconazol | 250 g/l |
| Emulgatoren | 100 g/l |

Kohlenwasserstoff/aromatische Lösungsmittel bis auf 100% des Volumens.

Beispiel 1

| | |
|---|---|
| Propiconazol | 250 g/l |

60%iger Ammoniumcumolsulfonat-Lösungs bis auf 100% des Volumens.

Wie aus den obigen Einzelheiten ersehen werden kann, enthalten beide Formulierungen die gleiche Konzentration an Wirkstoff; dennoch hat Beispiel 1 gegenüber dem Vergleichsbeispiel A die folgenden Vorteile:
i) es enthält keine potentiell gefährlichen Lösungsmittel
ii) es hat keinen Flammpunkt
iii) es enthält keinen Emulgator
iv) es kann in Polyethylen-Behältern verpackt werden und
v) es ist weniger giftig weil es auf der Basis von Wasser hergestellt ist.

Beispiel 2

| | |
|---|---|
| Propiconazol | 125 g/l |
| ®Soprophor FL (ex Rhone Poulenc) | 40 g/l |

40%ige Ammoniumxylolsulfonatlösung bis auf 100% des Volumens.

Beispiel 3

| | |
|---|---|
| Metolachlor | 300 g/l |
| ®Tween 85 (ex Atlas Chemicals) | 10 g/l |

60%ige Ammoniumcumolsulfonatlösung bis auf 100% des Volumens.

Beispiel 4

| | |
|---|---|
| Chlorfenvinphos | 300 g/l |
| ®Emulsogen EL (ex Hoechst AG) | 25 g/l |
| Ethylenoxyd/Propylenoxyd-Block-Compolymer | 25 g/l |

60%ige Ammoniumcumolsulfonatlösung bis auf 100% des Volumens.

Beispiel 5

| | |
|---|---|
| 2-(2,4-Dichlorphenyl)-1-(1H-1,2,4-triazol-1-yl)-pentan | 100 g/l |
| Cyclohexanon | 50 g/l |
| Xylol | 50 g/l |
| ®Emulsogen EL (ex Hoechst AG) | 25 g/l |
| Nonylphenolpolykolether (8 to 12 Mole Eo) | 25 g/l |

60%iger Ammoniumcumolsulfonatlösung bis auf 100% des Volumens.

Die Beispiele 1 bis 5 werden durch Auflösung des Aktivstoffes und der Formulierungshilfsmittel in der wässrigen Lösung des Sulfonsäuresalzes hergestellt, wobei eine homogene Lösung entsteht.

Gemische von zwei Wirkstoffen

Beispiel 6a

| | |
|---|---|
| Propiconazol | 250 g/l |
| Carbendazim | 200 g/l |
| ®Soprophor FL (ex Rhone Poulenc) | 70 g/l |
| ®Silicone antifoam M10 (ex Dow Corning) | 5 g/l |

60%iger Ammoniumcumolsulfonatlösung bis auf 100% des Volumens.

Beispiel 6b

| | |
|---|---|
| Propiconazol | 125 g/l |
| Carbendazim | 100 g/l |
| ®Soprophor FL (ex Rhone Poulenc) | 50 g/l |
| ®Aerosil COK 84 (ex Degussa) | 15 g/l |

60%ige Ammoniumcumolsulfonatlösung bis auf 100% des Volumens.

Alle Bestanteile der Beispiele 6a und 6b werden gemischt, indem man das Propiconazol und Soprophor FL in der Ammoniumcumolsulfonatlösung auflöst und anschliessend das Silicone antifoam und das Carbendazim zusetzt. Nachdem das Carbendazim in einem geeigneten Mischer suspendiert worden ist, wird das Gemisch nass gemahlen, wobei eine feine Suspension entsteht. In Beispiel 6b wird das Verdickungsmittel, Aerosil COK 84, nach dem Nassmahlen mit einem Mischer mit hoher Scherkraft in der Formulierung dispergiert.

Beispiel 7

| | |
|---|---|
| Metalaxyl | 80 g/l |
| Kupferoxychlorid | 690 g/l |
| ®Soprophor FL (ex Rhone Poulenc) | 30 g/l |
| ®Mowiol 40—88 (ex Hoechst) | 10 g/l |

60%ige Ammoniumcumolsulfonatlösung bis auf 100% des Volumens.

Das Metalaxyl, Soprophor FL und Mowiol 40—88 werden in der Ammoniumsulfonatlösung gelöst. Dann wird das Kupferoxychlorid in dieser Lösung suspendiert und diese Suspension in einer geeigneten Nassmahlanlage zu einer feinen Suspension vermahlen.

Beispiel 8

| | |
|---|---|
| Metalaxyl | 50 g/l |
| Ziram | 200 g/l |
| ®Aerosil COK 84 (ex Degussa) | 15 g/l |
| Natriumcumolsulfonat | 200 g/l |

Wasser bis auf 100% des Volumens.

Beispiel 8 wird hergestellt, indem man das Metalaxyl in der Lösung des Natriumcumolsulfonats in Wasser löst und das Ziram in dieser Lösung suspendiert. Nach Nassmahlen der Suspension in einer geeigneten Mühle, wird das Aerosil COK 84 mit einem Mischer mit hoher Scherkraft in der Formulierung dispergiert.

**Patentansprüche**

1. Ein wässriges Lösungskonzentrat, dadurch gekennzeichnet, dass es

α) ein flüssiges oder festes in Wasser stabiles und zu weniger als 1% lösliches Pestizid mit einer Wasserzahl grösser 10 und

β) ein Salz einer aromatischen Sulfonsäure der Formel

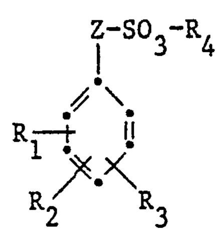

(I),

worin $R_1$, $R_2$ und $R_3$ die gleiche oder verschiedene Bedeutung haben und für Wasserstoff oder geradkettiges oder verzweigtes $C_1$—$C_6$-Alkyl stehen, Z eine direkte Bindung oder eine geradkettige oder verzweigte $C_1$—$C_6$-Alkylenbrücke und $R_4$ ein Alkalimetall, eine Ammoniumgruppe, eine primäre, sekundäre oder tetriäre Amingruppe, eine Hydroxyalkylamingruppe oder eine Morpholingruppe bedeutet, in einer zur Bildung einer wässrigen Lösung ausreichenden Menge enthält.

2. Ein Konzentrat gemäss Anspruch 1, dadurch gekennzeichnet, dass es bis zu 75%-Gew./Volumen des Pestizids als Komponente α und bis zu 70%-Gew./Volumen der Sulfonsäure der Formel I als Komponente β enthält.

3. Ein Konzentrat gemäss Anspruch 2, dadurch gekennzeichnet, dass es 5 bis 50%-Gew./Volumen an Pestizid und 15 bis 50%-Gew./Volumen an Sulfonsäure der Formel I enthält.

4. Ein Konzentrat einem gemäss der Ansprüche 1 bis 3, dadurch gekennzeichnet, dass das Pestizid flüssig ist.

5. Ein Konzentrat einem gemäss der Ansprüche 1 bis 3, dadurch gekennzeichnet, dass das Pestizid fest ist.

6. Ein Konzentrat gemäss einem der obigen Ansprüche, dadurch gekennzeichnet, dass Z eine direkte Bindung ist.

7. Ein Konzentrat gemäss einem der obigen Ansprüche, dadurch gekennzeichnet, dass $R_1$, $R_2$ und $R_3$ die gleiche oder verschiedene Bedeutung haben und Wasserstoff oder geradkettiges oder verzweigtes $C_1$—$C_3$ Alkyl bedeuten.

8. Ein Konzentrat gemäss einem der obigen Ansprüche, dadurch gekennzeichnet, dass die Verbindung der Formel I Ammoniumcumolsulfonat, Kaliumxylolsulfonat, Natriumtoluolsulfonat, Xylolsulfonsäure oder Natriumcumolsulfonat ist.

9. Ein Konzentrat gemäss einem der obigen Ansprüche, dadurch gekennzeichnet, dass ein funktionelles Hilfsmittel zugesetzt wird.

10. Ein Konzentrat gemäss Anspruch 9, dadurch gekennzeichnet, dass das funktionelle Hilfsmittel ein oder mehrere oberflächenaktive Mittel, ein Haft- oder Verdickungsmittel oder ein Antischaummittel ist.

11. Ein Konzentrat gemäss Anspruch 9, dadurch gekennzeichnet, dass das Formulierungshilfsmittel ein oder mehrere organische Lösungsmittel ist.

12. Ein Konzentrat gemäss einem der Ansprüche 4 oder 6 bis 11, dadurch gekennzeichnet, dass das flüssige Pestizid Chlorfenvinphos, Metolachlor, Propiconazol oder Imazalil ist.

13. Ein Konzentrat gemäss einem der Ansprüche 5 bis 11, dadurch gekennzeichnet, dass das feste Pestizid 2-(2,4-Dichlorphenyl)-1-(1H-1,2,4-triazol-1-yl)-pentan oder Metalaxyl ist.

14. Ein Konzentrat gemäss einem der obigen Ansprüche, dadurch gekennzeichnet, dass als weitere Komponente (γ) ein festes, nicht in einer wässrigen Lösung der Verbindung der Formel I lösliches Pestizid vorhanden ist.

15. Ein Konzentrat gemäss Anspruch 14, dadurch gekennzeichnet, dass die Komponente (α) Propiconazol und die Komponente (γ) Captan oder Carbendazim ist oder dass die Komponente (α) Metolachlor und die Komponente (γ) Atrazin ist oder dass die komponente (α) Imazalil und die Komponente (γ) Thiabendazol ist oder dass die Komponente (α) Metalaxyl oder 2-(2,4-Dichlorphenyl-1-(1H-1,2,4-triazol-1-yl)-pentan und die Komponente (γ) Kupferoxychlorid, Ziram oder Folpet ist.

16. Ein Verfahren zur Herstellung eines wassrigen Lösungskonzentrats gemäss Anspruch 1, dadurch gekennzeichnet, dass man die Komponente (α) in einer wässrigen Lösung der Komponente (β) löst.

17. Ein Verfahren zur Herstellung eines wässrigen Konzentrates gemäss Anspruch 14, dadurch gekennzeichnet, dass man eine Lösung der Komponente (α) in einer wässrigen Lösung der Komponente (β) herstellt und dann die Komponente (γ) zusetzt und die Mischung gewünschtenfalls bis zur gewünschten Partikelgrösse der festen Komponenten mahlt.

18. Ein wässriges Konzentrat, hergestellt nach einem Verfahren gemäss einem der Ansprüche 16 oder 17.

**Revendications**

1. Un concentré aqueux en solution, caractérisé en ce qu'il contient

α) une substance pesticide liquide ou solide, stable dans l'eau mais ayant une solubilité dans l'eau inférieure à 1%, à un indice d'eau supérieur à 10 et

β) un sel d'un acide aromatique sulfonique de formule

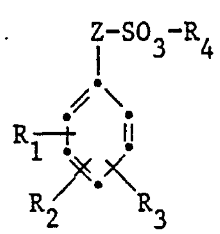

(I),

dans laquelle $R_1$, $R_2$, $R_3$ qui peuvent avoir des significations identiques ou différentes, représentent chacun

l'hydrogène ou un groupe alkyle à chaîne droite ou ramifiée en C1—C6, Z représente une liaison directe ou un pont alkylène à chaîne droite ou ramifiée en C1—C6 et $R_4$ représente un métal alcalin, un groupe ammonium, un groupe amine primaire, secondaire ou tertiaire, un groupe hydroxyalklyamine ou un groupe morpholine, en quantité suffisante pour former une solution aqueuse.

2. Un concentré selon la revendication 1 caratérisé en ce qu'il contient jusqu'à 75% en poids/volume de la substance pesticide, composant α) et jusqu'à 70% en poids/volume de l'acide sulfonique de formule I, composant β.

3. Un concentré selon la revendication 2, caractérisé en ce qu'il contient de 5 à 50% en poids/volume de la substance pesticide et de 15 à 50% en poids/volume de l'acide sulfonique de formule I.

4. Un concentré selon l'une des revendications 1 à 3, caractérisé en ce que la substance pesticide est liquide.

5. Un concentré selon l'une des revendications 1 à 3, caractérisé en ce que la substance pesticide est solide.

6. Un concentré selon l'une des revendications ci-dessus, caractérisé en ce que Z représente une liaison directe.

7. Un concentré selon l'une des revendications ci-dessus, caractérisé en ce que $R_1$, $R_2$ et $R_3$, qui peuvent avoir des significations identiques ou différentes, représentent chacun l'hydrogène ou un groupe alkyle à chaîne droite ou ramifiée en C1—C3.

8. Un concentré selon l'une des revendications ci-dessus, caractérisé en ce que le composé de formule I est le cumène-sulfonate d'ammonium, le xylène-sulfonate de potassium, le toluène-sulfonate de sodium, l'acide xylène sulfonique ou le cumène-sulfonate de sodium.

9. Un concentré selon l'une des revendications ci-dessus, caractérisé en ce qu'il est additionné d'un produit auxiliaire fonctionnel.

10. Un concentré selon la revendication 9, caractérisé en ce que le produit auxiliaire fonctionnel consiste en un ou plusieurs agents tensio-actifs, un adhésif ou un agent épaississant ou un agent anti-mousse.

11. Un concentré selon la revendication 9, caractérisé en ce que le produit auxiliaire de formulation consiste en un ou plusieurs solvants organiques.

12. Un concentré selon l'une des revendications 4 ou 6 à 11, caractérisé en ce que la substance pesticide liquide est le Chlorfenvinphos, le Metolachlor, le Propiconazol ou l'Imazalil.

13. Un concentré selon l'une des revendications 5 à 11, cartactérisé en ce que la substance pesticide solide est le 2-(2,4-dichlorophényl)-1-(1H-1,2,4-triazole-1-yl)-pentane ou le Metalaxyl.

14. Un concentré selon l'une des revendications ci-dessus, caractérisé en ce qu'il contient en tant qu'autre composant γ) une substance pesticide solide qui n'est pas soluble dans une solution aqueuse du composé de formule I.

15. Un concentré selon la revendication 14, caractérisé en ce que le composant α) est le Propiconazol et le composant γ) est le Captan ou le Carbendazim ou bien le composant α) est le Metolachlor et le composant γ) est l'Atrazin ou bien le composant α) est l'Imazalil et le composant γ) est le Thiabendazol ou bien le composant α) est le Metalaxyl ou le 2-(2,4-dichlorophényl-1-(1H-1,2,4-triazole-1-yl)-pentane et le composant γ) est l'oxychlorure de cuivre, le Ziram ou le Folpet.

16. Un procédé pour la préparation d'un concentré aqueux en solution selon la revendication 1, caractérisé en ce que l'on dissout le composant α) dans une solution aqueuse du composant β).

17. Un procédé pour la préparation d'un concentré aqueux selon la revendication 14, caractérisé en ce que l'on prépare une solution du composant α) dans une solution aqueuse du composant γ) puis on ajoute le composant γ) et le cas échéant, on broie le mélange jusqu'à la dimension de particule voulue pour le composant solide.

18. Un concentré aqueux préparé par un procédé selon l'une des revendications 16 ou 17.

**Claims**

1. An aqueous solution concentrate comprising

α) a liquid or solid pesticide that is stable in water and less than 1% soluble in water and has a water number greater than 10, and

β) a salt of an aromatic sulphonic acid having the formula

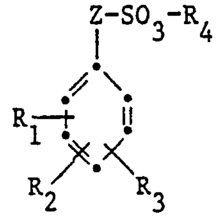

(I),

wherein $R_1$, $R_2$ and $R_3$ have the same or different meanings and each is hydrogen or straight-chain or

branched $C_1$—$C_6$-alkyl, Z is a direct bond or a straight-chain or branched $C_1$—$C_6$-alkylene bridge and $R_4$ is an alkali metal, an ammonium group, a primary, secondary or tertiary amine group, a hydroxyalkylamine group or a morpholine group, in an amount sufficient to form an aqueous solution.

2. A concentrate according to claim 1, which contains up to 75% w/v of the pesticide as component α and up to 70/ w/v of the sulphonic acid of formula I as component β.

3. A concentrate according to claim 2, which contains 5—50% w/v of the pesticide and 15—50% w/v of the sulphonic acid of formula I.

4. A concentrate according to any one of claims 1 to 3, wherein the pesticide is liquid.

5. A concentrate according to any one of claims 1 to 3, wherein the pesticide is solid.

6. A concentrate according to any one of the preceding claims, wherein Z is a direct bond.

7. A concentrate according to any one of the preceding claims, wherein $R_1$, $R_2$ and $R_3$ have the same or different meanings and each is hydrogen or straight-chain or branched $C_1$—$C_3$-alkyl.

8. A concentrate according to any one of the preceding claims, wherein the compound of formula I is ammonium cumenesulphonate, potassium xylenesulphonate, sodium toluenesulphonate, xylenesulphonic acid or sodium cumenesulphonate.

9. A concentrate according to any one of the preceding claims, wherein a functional aid is needed.

10. A concentrate according to claim 9, wherein the functional aid is one or more surfactant(s), a tackifier or thickener or an antifoam.

11. A concentrate according to claim 9, wherein the formulation aid is one or more organic solvent(s).

12. A concentrate according to any one of claims 4 or 6 to 11, wherein the liquid pesticide is Chlorfenvinphos, Metolachlor, Propiconazole or Imazalil.

13. A concentrate according to any one of claims 5 to 11, wherein the solid pesticide is 2-(2,4-dichlorophenyl)-1-(1H-1,2,4-triazol-1-yl)-pentane or Metalaxyl.

14. A concentrate according to any one of the preceding claims, wherein there is present, as a further component (γ), a solid pesticide not soluble in an aqueous solution of a compound of formule I.

15. A concentrate according to claim 14, wherein component (α) is Propiconazole and component (γ) is Captan or Carbendazim, or component (α) is Metolachlor and component (γ) is Atrazine, or component (α) is Imazalil and component (γ) is Thiabendazole, or component (α) is Metalaxyl or 2-(2,4-dichlorophenyl)-1-(1H-1,2,4-triazol-1-yl)-pentane and component (γ) is copper oxychloride, Ziram or Folpet.

16. A process for producing an aqueous solution concentrate as defined in claim 1, comprising dissolving component (α) in an aqueous solution of component (β).

17. A process for producing an aqueous concentrate as defined in claim 14, comprising producing a solution of component (α) in an aqueous solution of component (β) and then adding component (γ), and optionally milling the mixture to the desired particle size of the solid components.

18. An aqueous concentrate produced by a process according to claim 16 or claim 17.